# EUROPEAN PATENT SPECIFICATION

(11) **EP 3 467 980 B1**
(45) Date of publication and mention of the grant of the patent: **15.09.2021**
(21) Application number: 18198445.1
(22) Date of filing: 03.10.2018
(51) Int. Cl.: H02G 3/20, H02G 3/12

(54) **CONNECTION SYSTEM FOR ELECTRICAL DEVICES**
VERBINDUNGSSYSTEM FÜR ELEKTRISCHE VORRICHTUNGEN
SYSTÈME DE CONNEXION POUR DISPOSITIFS ÉLECTRIQUES

(30) Priority: 04.10.2017 BE 201705710
(43) Date of publication of application: 10.04.2019
(73) Proprietor: Niko NV, 9100 Sint-Niklaas (BE)
(72) Inventor: DE VOS, Pieter, 8000 Brugge (BE); VERHEULE, Gert, 2620 Hemiksem (BE)
(74) Representative: DenK iP bv

(56) References cited:
- FR-A- 1 532 626
- US-B1- 6 875 937

## Description

### Field of the invention

The invention relates to the field of electrical devices for physically mounting in or on a wall or ceiling. More specifically it relates to a connection system for connecting an electrical device to a plurality of electrical conductors, e.g. to wires of one or more electrical cables which are present in the wall or ceiling.

### Background of the invention

Wall and/or ceiling mountable electrical devices, such as sensors for, for example, temperature, daylight or motion detection, controllers, actuators, lighting means, speakers or the like, need to be connected to a plurality of electrical conductors of cables that are generally hidden by the wall or ceiling, for example cables that run through a ceiling void, a wall void or in a technical space and/or that are embedded in the wall or ceiling material. Such wall and/or ceiling mountable devices may, for example, form part of a home automation system. The wall and/or ceiling device may also, for example, be a combination of a controller and a sensor and/or an actuator, e.g. such as to act as a substantially stand-alone component. For such devices, e.g. particularly elements of a home automation system or stand-alone components, a substantial number of electrical conductors may need to be connected via cables to the device, e.g. to provide various control and/or sensor signals and/or to connect to a wired data transmission network.

Current connection systems for connecting electrical devices to a cable in a wall or ceiling may comprise a plurality of connectors or terminals in a single plane parallel to the wall or ceiling when the device is mounted. This has the advantage that the depth profile can be relatively low, e.g. because all connections are provided at a same recessed distance with respect to the surface of the wall or ceiling. However, for devices which require a substantial number of separate connections, this has the disadvantage that also a relatively large hole may need to be provided in the wall or ceiling, as the connection system gets broader when more connections are required. Therefore, because of limited size of the holes in the ceiling, the number of connections that can be provided to the device may also be limited.

The UK patent application GB 2 386 768 discloses a ceiling socket that comprises mains terminal connectors to be concealed in a ceiling, a three-pin socket for fixing to the underside of the ceiling and a pre-wired connecting shaft between these. A connection to a light fitting can be made using a plug that connects directly to the ceiling socket. The three-pin socket is circular in shape and has a screw thread such that it can be fitted with an expansion ring.

The UK patent application GB 2 438 444 discloses an electrical connection device, such as a smoke alarm, which can be mounted on a ceiling. The device has an upper section and a lower section. The upper section is mounted in an aperture of the ceiling and the lower section is wider and abuts the ceiling. The lower section contains terminals to connect to an active unit, such as a smoke detector, fire detector or sounder, and the upper section has connection means connected to these. The connection means may be sockets into which plugs on wires may be connected.

Document US6875937B1 discloses an outlet assembly comprising an electrical outlet device and an outlet device box which allows forming a wiring cavity. The wiring cavity can contain a plurality of wire junctions to connect terminals to external wires from cables. If a large number of wires is required, there may be entanglement due to leaving the wires floating within the cavity.

Document FR1532626A discloses a junction box with an encased block including junction bars. Conductor sheaths are introduced through the flexible top end of the tubular case and connect to the lower conductors via de connections of the block. The lower conductors are passed through a flexible bottom end. This way, the connections are insulated and protected.

### Summary of the invention

It is an object of embodiments of the present invention to provide a good and efficient way for electrically connecting electrical devices to a plurality of electrical conductors of a cable in a wall or ceiling.

The above objective is accomplished by a method and device according to the present invention.

It is an advantage of embodiments of the present invention that an electrical device that requires a substantial number of connections to individual electrical conductors, e.g. electrical wires, for example at least 5 connections, e.g. at least 7 connections, e.g. at least 9 connections, e.g. at least 12 connections, can be installed in or through a small hole in the wall or ceiling, e.g. a hole having a diameter of less than 10 cm, e.g. a hole having a diameter of less than 8 cm, e.g. less than 7 cm.

It is an advantage of embodiments of the present invention that an electrical device that requires a substantial number of connections to individual electrical conductors, e.g. electrical wires, can be installed in or through a hole in the wall or ceiling that has a standard diameter, e.g. a hole having a diameter of about 68 mm.

It is an advantage of embodiments of the present invention that an electrical device can be installed using standardized and commonly available equipment for drilling holes.

It is an advantage of embodiments of the present invention that an electrical device can be installed in or through general purpose and/or standard holes in walls or ceilings, e.g. holes that are preemptively provided, e.g. suitable for installing conventional lighting, switches and/or power or data sockets.

It is an advantage of embodiments of the present invention that an electrical device that requires connections to individual electrical conductors encapsulated in a plurality of electrical cables, e.g. at least two electrical cables, can be installed in or through a hole in the wall or ceiling that has a relatively small diameter and/or a standard diameter, e.g. as referred to hereinabove.

It is an advantage of embodiments of the present invention that electrical connections to a plurality of electrical conductors can be easily covered, e.g. shielded and/or protected, by a protective cover.

It is an advantage of embodiments of the present invention that a user or a material, such as a flammable and/or conductive material used in insulation or construction of walls or ceilings, can be protected from inadvertently touching electrical conductors by a protective cover. It is a further advantage that an electrocution hazard and/or fire hazard can be easily reduced. It is a further advantage that safety requirements can be easily complied with.

In a first aspect, the present invention relates to a connection system for connecting an electrical device to a plurality of electrical according to claim 1.

In a connection system in accordance with embodiments of the present invention, the at least one cable guide may be adapted for guiding the at least one cable under an acute angle with respect to the direction, or in other words, under an acute angle with respect to the front surface of the wall or ceiling when installed.

In a connection system in accordance with embodiments of the present invention, the cable guide may be adapted for guiding the at least one cable under an angle in the range of 30 to 65 degrees with respect to said direction, or in other words, under an acute angle with respect to the front surface of the wall or ceiling when installed.

A connection system in accordance with embodiments of the present invention may comprise a hinge for mechanically connecting the protective cover to the upper part of the body, such that the protective cover can be folded around the upper part of the body when moving from an open position, in which the plurality of connectors and the plurality of electrical conductors can be manipulated, to a closed position, in which the plurality of connectors and the plurality of electrical conductors are covered to prevent accidental contact.

In a connection system in accordance with embodiments of the present invention, the protective cover may comprise at least one further hinge dividing the protective cover into a plurality of segments.

A connection system in accordance with embodiments of the present invention may comprise the electrical device.

In a connection system in accordance with embodiments of the present invention, the electrical device may comprise a sensor, an actuator and/or a controller.

A connection system in accordance with embodiments of the present invention, may comprise an attachment assembly for mechanically attaching the electrical device to the connection system.

In a connection system in accordance with embodiments of the present invention, the mounting assembly may comprise a collar or flange having an outer circumference larger than an outer circumference of said upper part, such that the collar or flange abuts on the front surface of the wall or ceiling around the hole when installed.

In a connection system in accordance with embodiments of the present invention, the plurality of connectors may be reversibly removable such that the plurality of connectors can be removed from the body to connect the plurality of electrical conductors to the plurality of connectors.

In a second aspect, the present invention also relates to a method for connecting an electrical device to a plurality of electrical conductors of a cable in the wall and/or ceiling according to claim 13.

A method in accordance with embodiments of the present invention may comprise folding the protective cover around the upper part of the body to cover the plurality of connectors and the plurality of electrical conductors.

In a method in accordance with embodiments of the present invention, said guiding the cable by the cable guide may orient the free end of the cable under an acute angle with respect to a contact surface of the lower part of the body of the connection system.

Particular and preferred aspects of the invention are set out in the accompanying independent and dependent claims.

These and other aspects of the invention will be apparent from and elucidated with reference to the embodiment(s) described hereinafter.

### Brief description of the drawings

FIG 1 shows a first side view of a first exemplary connection system in accordance with embodiments of the present invention.
FIG 2 shows a second side view of the first exemplary connection system in accordance with embodiments of the present invention.
FIG 3 shows a second exemplary connection system in accordance with embodiments of the present invention, in which a protective cover is in an opened configuration.
FIG 4 shows the second exemplary connection system in accordance with embodiments of the present invention, in which the protective cover is in a closed configuration.
FIG 5 schematically shows another exemplary connection system in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a connection system for connecting an electrical device to a plurality of electrical conductors of a cable which is present in a wall or a ceiling. The connection system comprises a body for installing in or through a hole in a wall or ceiling. The body has a lower part for being positioned closest to a front surface of the wall or ceiling and a upper part for being positioned away from, i.e. furthest from, the front surface of the wall or ceiling when the body is installed in or through the hole. In other words, when the connection system is mounted in or on a wall or a ceiling, the lower part is put in or on the wall or ceiling and the upper part extends away from the lower part into the wall or ceiling.

The connection system comprises a mounting assembly for fixing the connection system to the wall or ceiling when the body is installed in or through the hole. The mounting assembly is connectable to, connected to and/or part of the lower part of the body, e.g. is arranged in or on the lower part of the body. For example, the lower part of the body may comprise the mounting assembly.

The connection system comprises a plurality of connectors for connecting the plurality of electrical conductors to the device. The plurality of connectors are arranged in or on the upper part of the body. For example, the upper part of the body may comprise the plurality of connectors. The plurality of connectors are arranged next to each other in a direction that extends away from the mounting assembly when installed, or in other words, a direction that extends away from the front surface of the wall or ceiling when the body is installed in or through the hole.

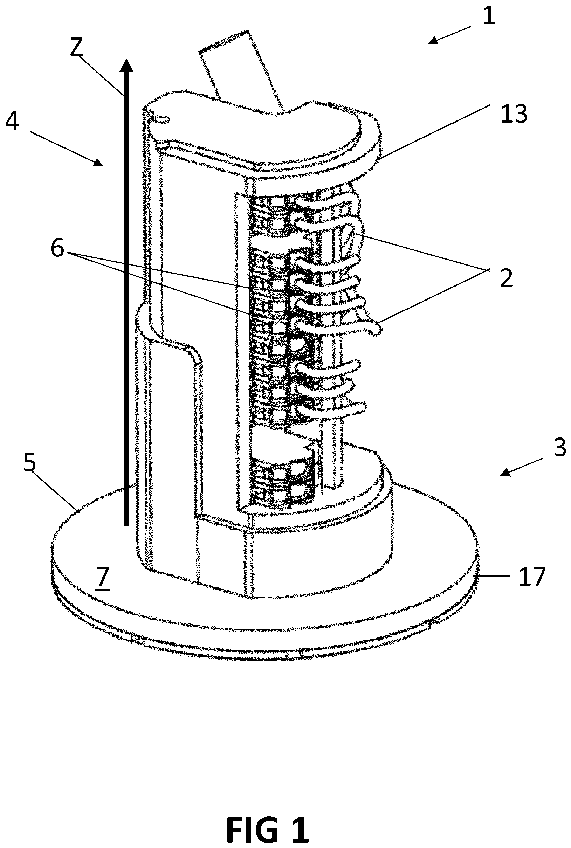

Referring to FIG 1, an exemplary connection system 1 in accordance with embodiments of the present invention is shown. This connection system 1 is adapted for connecting an electrical device to a plurality of electrical conductors 2. The electrical device may be any device that can be mounted on a ceiling or wall in or of a building, such as e.g. a sensor, an actuator, a lighting element, a speaker or the like.

The connection system 1 comprises a body 13 for installing in or through a hole in a wall or ceiling. The body 13 has a lower part 3 and an upper part 4, e.g. may consist of the lower part 3 and the upper part 4.

The lower part 3 is adapted for being positioned close to, e.g. abutting on, a front surface of the wall or ceiling when the body 13 is installed in or through the hole. The front surface may refer to the surface of the wall or ceiling of a room that faces the interior space of that room.

Alternatively, the lower part 3 may be adapted for being positioned close to, e.g. abutting on, a back surface of the wall or ceiling when the body 13 is installed, e.g. the back surface of the wall or ceiling that faces away from the interior space of the room. For example, when installed, the ceiling or wall may be positioned in between the lower part of the body 13 and a device holding part referred to hereinbelow.

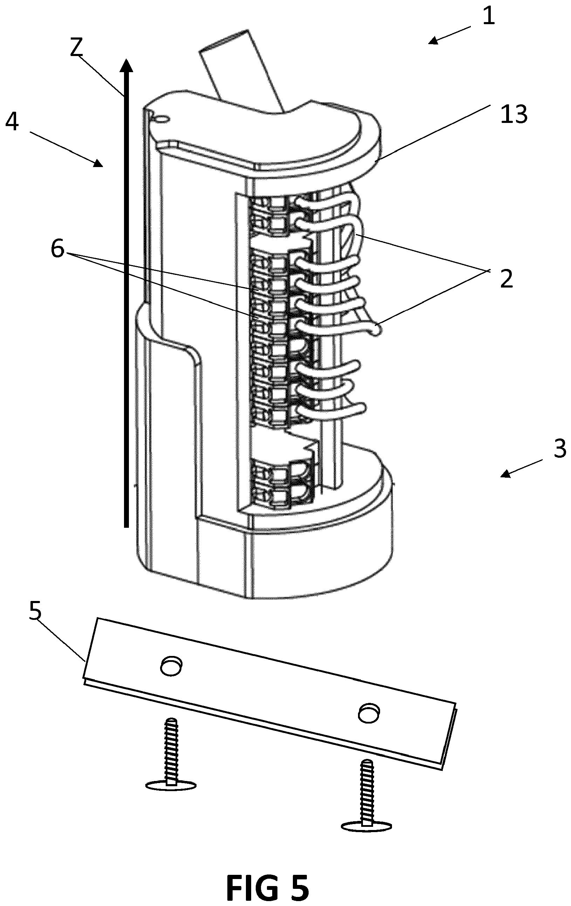

The connection system 1 comprises a mounting assembly 5 for fixing the connection system to the wall or ceiling when the body 13 is installed in or through the hole. The mounting assembly 5 is connectable to, connected to and/or part of the lower part 3 of the body 13. For example, the lower part 3 of the body 13 may comprise the mounting assembly 5, e.g. as shown in FIG 1 to 4. However, the mounting assembly 5 may also be connectable to the lower part 3 of the body 13 when installed, e.g. as shown in FIG 5.

The mounting assembly 5 may comprise a collar and/or flange 17 having an outer circumference larger than an outer circumference of the upper part, such that the collar or flange abuts on the front surface of the wall or ceiling around the hole when the body 13 is installed in or through the hole. The outer circumference of the upper part 4 may refer to a largest circumference of the upper part 4 out of all circumferences of the upper part 4 measured in planes parallel to the front surface, e.g. parallel to a contact surface 7, of the flange and/or collar, for abutting on the front surface. Such collar and/or flange may, for example, be fixed using screws, an adhesive or other known fixation means to the front surface, or may be clamped to the ceiling by clamps as know by a person skilled in the art. The collar or flange 17 may be connected to, or part of, the lower part 3 of the body, e.g. as illustrated in FIG 1 to 4, or may be connectable to the lower part 3 of the body.

The upper part 4 of the body 13 is adapted for being positioning away from the front surface of the wall or ceiling when the body 13 is installed in the hole. For example, when installed, the upper part 4 may be inserted into or through the hole, e.g. such as to extend into a wall or ceiling material and/or into a wall or ceiling void, e.g. while the lower part 3 may be abutting on the front surface of the wall or ceiling. The wall or ceiling void may refer to a space on a side of the ceiling or wall that is opposite of the front surface, e.g. that is separated from the interior of a room by the ceiling or wall.

The connection system 1 further comprises a plurality of connectors 6 for connecting the plurality of electrical conductors 2 of the cable in the wall or ceiling to the electrical device. The plurality of connectors 6 are arranged in or on the upper part 4 of the body 13, e.g. such as to be positioned inside and/or behind the wall or ceiling, e.g. on a side of the wall or ceiling that is opposite from the front surface, when the body 13 is installed in or through the hole.

The connectors 6 are arranged next to each other in a direction Z that extends away from the mounting assembly 5 when the electrical device is installed in the wall or ceiling, or in other words that extends away from the front surface of the wall or ceiling when the electrical device is installed in the wall or ceiling. For example, the connectors 6 may be arranged next to each other in a direction that extends away from the contact surface 7, of the flange and/or collar, for abutting on the front surface. Where reference is made to arranged next to each other, this refers to an alignment of the elements along a line, but not necessarily to a configuration in which the elements are abutting, e.g. the elements may be next to each other yet spaced apart.

Each connector 6 may comprise a releasable connector, such as conductive clamp for clamping the electrical conductor. For example, such clamp may be closed on the electrical conductor by means of a lever, a screw, or similar operating mechanisms for electrical clamps known in the art.

In a connection system 1 in accordance with embodiments of the present invention, the direction Z may be substantially perpendicular to the mounting assembly 5, or in other words may be substantially perpendicular to the front surface of the wall or ceiling when the body 13 is installed in or through the hole, e.g. substantially perpendicular to the contact surface 7. 'Substantially perpendicular' may refer to an angle of 90° between the direction Z and the plane referred to, or may refer to an angle in the range of 75° to 90°, e.g. in the range of 80° to 90°, e.g. in the range of 85° to 90°. An angle between a direction and a plane is commonly understood to refer to the right or acute angle between a vector representative of the direction and the orthonormal projection of that vector onto the plane.

In some embodiments in accordance with the present invention, the plurality of connectors 6 may be reversibly removable, e.g. the plurality of connectors may be removed from the body 13 to connect the plurality of electrical conductors to the plurality of connectors, e.g. advantageously increasing the freedom in manipulating the connectors when connecting the electrical conductors, and returned to the configuration in which it is attached to the upper part 4 and in which the connectors 6 are aligned along the direction Z. Alternatively, the plurality of connectors 6 may be reconfigurable in at least two configurations, in which in a first configuration the connectors 6 are arranged next to each other in the direction Z and in another configuration the plurality of connectors 6 are not aligned in this direction Z. In this (at least one) other configuration, a higher degree (or range) of the freedom may be provided in manipulating the connectors when connecting the electrical conductors. For example, the connection system 1 may comprise a hinge that connects the plurality of connectors 6 to the upper part 4 such as to enable the plurality of connectors 6 to be cantilevered.

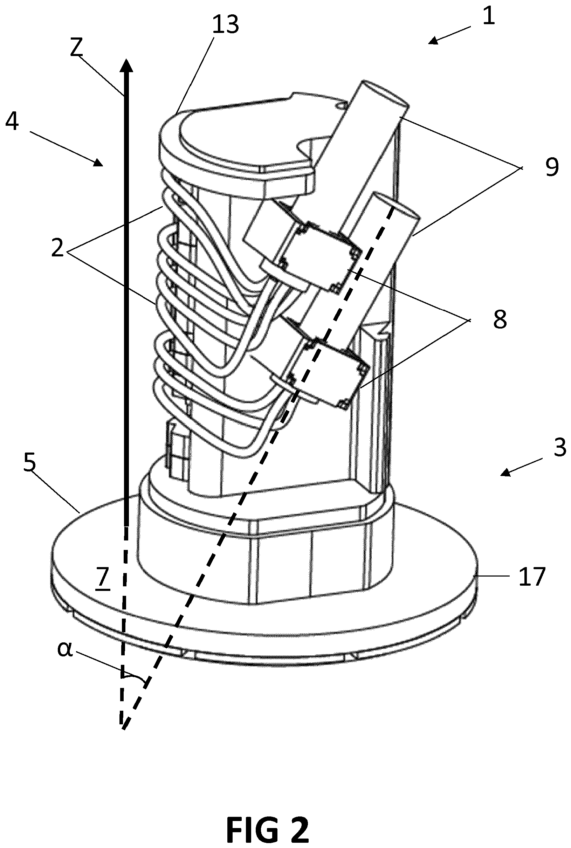

Referring to FIG 2, the connection system 1 may also comprise at least one cable guide 8 for guiding at least one cable 9. The at least one cable guide 8 may be part of (e.g. integrally formed in) or fixed to the upper part 4 of the body 13. In case the cable guide 8 is fixed to the upper part 4 of the body 13, it may be fixed such that it can slightly move. With slightly moved is meant that it can be moved back and forth for a few angle degrees so as to guide the cables when they are moved into the right direction when the electrical device and connection system 1 are mounted (e.g. also described further hereinbelow).

For example, the at least one cable guide 8 may comprise a cable guide for a power supply cable, e.g. which may comprise 2 to 5 electrical wires, e.g. a live wire, a neutral wire and a ground wire. The at least one cable guide 8 may comprise a cable guide for a data communication cable, e.g. which may comprise 2 to 9 electrical signal conductors, e.g. 6 or 7 such conductors, such as a data communication bus cable or a data communication network cable, e.g. a shielded or unshielded twisted pair cable.

The at least one cable guide 8 may be adapted for guiding the at least one cable 9 under an acute angle α with respect to the direction Z.

The at least one cable guide 8 and the plurality of connectors 6 may be arranged such as to enable a connection of the plurality of electrical conductors 2 to the device, when the plurality of electrical conductors 2 are provided in the form of insulated and encapsulated wires in the cable or cables 9 guided by the at least one cable guide 8.

The cable guide(s) 8 may be adapted for guiding the at least one cable 9 under an angle in the range of 30 to 65 degrees, e.g. in the range of 40 to 50 degrees, e.g. substantially 45 degrees, with respect to the front surface of the wall or ceiling (or with respect to the contact surface 7) when installed.

Preferably, the cable 9 is able to move between 0 degrees, when putting the connection system 1 in the wall or ceiling, and 90 degrees after being mounted in the wall or ceiling. The cable guide(s) 8 help to obtain this. The cable guide(s) 8 further help in facilitate the height of the total concept, i.e. the connection system 1 when installed in the wall or ceiling. Because the cable(s) 9 are guided, they can bend to 90 degrees in case of lower ceilings or thinner walls.

The at least one cable guide 8 may comprise a plurality of cable guides. The plurality of cable guides 8 may be positioned above each other in the direction Z.

The at least one cable guide 8 may comprise a fixation for fixing the cable in a predetermined position and orientation. For example, the at least one cable guide 8 may comprise a clamp for clamping the cable.

The plurality of connectors 6, or each connector 6, may be spaced away from the cable guide(s) 8, or each cable guide 8, by an angular separation around the upper part 4 of at least 90 degrees, e.g. in the range of 90 degrees to 180 degrees, e.g. preferably in the range of 135 degrees to 180 degrees, or even more preferred in the range of 155 degrees to 180 degrees. Thus, an electrical conductor 2 received from an electrical cable 9 held by a cable guide 8 can be twisted around a central, longitudinal axis of the upper part 4, e.g. a central axis that is oriented in the direction Z, over an angle of at least 90° to be connected by its free end to a connector 6. It is an advantage that the individual wires can be easily configured in a compact configuration while still preventing entanglement of the wires and/or extensive crossing of wires over each other. Where reference is made to this angular separation and its associated angle, it is to be understood that reference is made to an angle as obtained in a plane parallel to the front surface of the wall or ceiling, when installed (or to the contact surface 7), for example as obtained between respectively a point that is the orthonormal projection of an end of the cable guide configured to hold a free end of the cable, when in use, onto such plane and a point that is the orthonormal projection of a terminal of the connector 6 that is configured to hold a free end of the wire onto that plane.

The connection system 1 may comprise the electrical device. Alternatively, the connection system 1 may comprise an attachment assembly for mechanically attaching the electrical device to the connection system 1. According to preferred embodiments, the electrical device may comprise a sensor, an actuator and/or a controller.

The attachment assembly may comprise connecting means for removably fixing a device holding part for receiving the electrical device to the body 13 of the connection system 1. According to embodiments of the invention, the connection system 1 may comprise the device holding part. The mounting assembly 5 may comprise the attachment assembly.

Furthermore, the connection system 1 may comprise the electrical device, e.g. a controller and/or actor unit. For example, this device may be adapted for handling data communication over a data network or data bus interface that it is linked to, in operation, via at least some of the electrical conductors 2. The connection system 1 may comprise an attachment assembly for mechanically attaching a further wall and/or ceiling mountable device to the connection system, e.g. to a sensor and/or an actuator. The controller and/or actor unit may be electrically connected to the further device when attached.

For example, the plurality of connectors 6 may comprise or consist of electrical terminals of the wall and/or ceiling mountable device, e.g. of a controller and/or actor unit. Alternatively, each connector 6 may be adapted for connecting to the electrical conductor 2, e.g. releasably connecting thereto, at one end and for connecting to a secondary wire at another end such as to establish an electrical connection between the electrical conductor and the secondary wire. The secondary wires may be connected to the wall and/or ceiling mountable device.

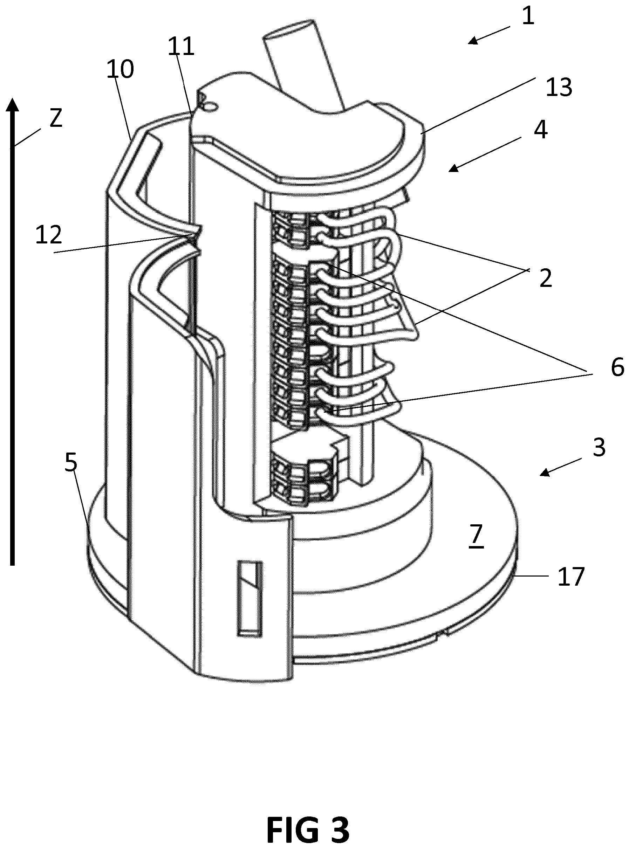

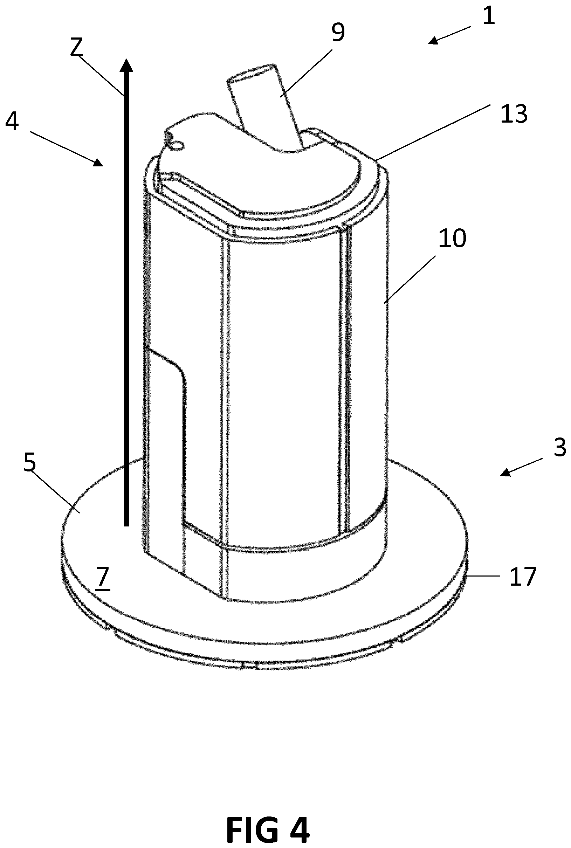

Referring to FIG 3 and FIG 4, a connection system 1 in accordance with embodiments of the present invention may comprise a protective cover 10. The protective cover 10 may be adapted for covering the plurality of connectors 6 when the body 13 is installed in or through the hole.

The protective cover 10 may be connected by a hinge 11 to the upper part 4 of the body 13. The protective cover 10 may comprise at least one further hinge 12 dividing the protective cover 10 into a plurality of segments. Thus, the protective cover 10 may be adapted for folding around the upper part 4 of the body 13 when moving from an open position, in which the plurality of connectors 6 and the plurality of electrical conductors 2 can be manipulated, e.g. as illustrated in FIG 3, to a closed position, in which the plurality of connectors 6 and the plurality of electrical conductors 2 are covered to prevent accidental contact, e.g. as illustrated in FIG 4. The protective cover 10 may be composed of an electrically insulating material.

The hinge 11 and the protective cover 10 are not necessarily separate components, e.g. the hinge 11, the protective cover 10 and the upper part 4 of the body 13 may be integrally formed from a common material, such as a polymer, e.g. such that the hinge is formed by a region of suitable flexibility. Likewise, the at least one further hinge 12 and the protective cover 10 may be integrally formed from the common material.

The hinge 11 and/or any further hinge 12 may be oriented along the direction Z that extends away from the mounting assembly 5, or in other words that extends away from the front surface of the wall or ceiling when installed, e.g. such as to enable a rotation of the protective cover 10 (and/or a segment thereof) around a hinge axis that is substantially parallel to the direction Z.

In a second aspect, the present invention also relates to a method for connecting a wall and/or ceiling mountable device to a plurality of electrical conductors. The method comprises a step of providing a connection system 1 in accordance with embodiments of the first aspect of the present invention. The method comprises providing a wall or ceiling. In the wall or ceiling, a hole is provided for installing the connection system 1 in or through. The wall or ceiling covers or embeds at least one cable 9 that comprises a plurality of electrical conductors 2, e.g. electrical wires.

The method comprises obtaining a free end of the cable 9 (or of each of the cables) through the hole out of the wall or ceiling.

The method may comprise guiding the or each cable 9 by the cable guide(s) 8, for example such as to orient the free end(s) under an acute angle with respect to a contact surface of the lower part of the body 13 of the connection system.

The method comprises connecting the plurality of electrical conductors 2 at the free end(s) to the plurality of connectors 6 of the connection system 1.

For example, the method may comprise stripping the cable(s) to expose the plurality of electrical conductors 2. Alternatively, the cable(s) may be provided in a form having a pre-stripped free end. For example, a part of the cable 9 may be stripped at the free end from where it exits the cable guide 8.

The method may comprise folding the protective cover 10 around the upper part 4 of the body 13 to cover the plurality of connectors 6 and the plurality of electrical conductors 2.

The method comprises inserting the upper part 4 of the body 13 of the connection system 1 in or through the hole in the wall or ceiling.

The method also comprises fixing the connection system 1 to the wall or ceiling using the mounting assembly 5.

## Claims

1. A connection system (1) for connecting an electrical device to a plurality of electrical conductors (2), the connection system (1) comprising
- a body (13) for installing in or through a hole in a wall or ceiling, said body having a lower part (3) for being positioned close to a front surface of said wall or ceiling when installed, said body having an upper part (4) for being positioned away from said front surface of said wall or ceiling when installed,
- a mounting assembly (5) for fixing the connection system (1) to said wall or ceiling, said mounting assembly (5) being connectable to, connected to and/or part of said lower part (3) of said body (13);
- a plurality of connectors (6) for connecting the plurality of electrical conductors (2) to the device, said plurality of connectors (6) being arranged in or on said upper part (4) of said body (13) and next to each other in a direction (Z) that extends away from the mounting assembly (5) when installed; and
- a protective cover (10) for covering the plurality of connectors (6) when installed, the connection system (1) further comprises:
- at least one cable guide (8) for guiding at least one cable (9), said at least one cable guide (8) being part of or fixed to said upper part (4) of the body, in which the at least one cable guide (8) and the plurality of connectors (6) are arranged such as to enable a connection of the plurality of electrical conductors (2) to the plurality of connectors (6), the plurality of electrical conductors (2) being provided in the form of insulated and encapsulated wires in the at least one cable (9) guided by the at least one cable guide (8).

2. The connection system of claim 1, wherein said plurality of connectors (6) are arranged next to each other in a direction (Z) that is substantially perpendicular to said mounting assembly (5).

3. The connection system of any of the previous claims, wherein the plurality of connectors (6) are spaced away from the at least one cable guide (8) by an angular separation around the upper part (4) of at least 90°.

4. The connection system of any of the previous claims, wherein said at least one cable guide (8) is adapted for guiding the at least one cable (9) under an acute angle with respect to said direction (Z).

5. The connection system of claim 4, wherein said cable guide (8) is adapted for guiding the at least one cable (9) under an angle in the range of 30 to 65 degrees with respect to said direction (Z).

6. The connection system of claim 5, comprising a hinge (11) for mechanically connecting the protective cover (10) to the upper part (4) of the body, such that the protective cover (10) can be folded around the upper part (4) of the body when moving from an open position, in which the plurality of connectors (6) and the plurality of electrical conductors (2) can be manipulated, to a closed position, in which the plurality of connectors (6) and the plurality of electrical conductors (2) are covered to prevent accidental contact.

7. The connection system of claim 6, in which the protective cover (10) comprises at least one further hinge (12) dividing the protective cover (10) into a plurality of segments.

8. The connection system of any of the previous claims, in which said connection system comprises the electrical device.

9. The connection system of claim 8, in which the electrical device comprises a sensor, an actuator and/or a controller.

10. The connection system of any of the claims 1 to 7, comprising an attachment assembly for mechanically attaching the electrical device to the connection system.

11. The connection system of any of the previous claims, in which said mounting assembly (5) comprises a collar or flange (17) having an outer circumference larger than an outer circumference of said upper part (4), such that said collar or flange (17) abuts on the front surface of the wall or ceiling around the hole when installed.

12. The connection system of any of the previous claims, in which said plurality of connectors (6) are reversibly removable such that said plurality of connectors can be removed from the body (13) to connect the plurality of electrical conductors to the plurality of connectors.

13. A method for connecting an electrical device to a plurality of electrical conductors (2) of a cable (9) in said wall and/or ceiling, the method comprising:
- providing a connection system (1) according to any of the previous claims,
- providing a wall or ceiling having a hole therein for installing the connection system (1) in or through, said wall or ceiling covering or embedding a cable (9) comprising a plurality of electrical conductors (2),
- obtaining a free end of said cable (9) through the hole out of the wall or ceiling,
- connecting said plurality of electrical conductors (2) at said free end to the plurality of connectors (6) of the connection system (1),
- inserting the upper part (4) of the body of the connection system (1) in or through the hole, and
- fixing the connection system (1) to said wall or ceiling using the mounting assembly (5).

14. The method of claim 13, comprising guiding the cable (9) by the cable guide (8).

15. The method of claim 13 or 14, comprising folding the protective cover (10) around the upper part (4) of the body to cover the plurality of connectors (6) and the plurality of electrical conductors (2).

## Patentansprüche

1. Verbindungssystem (1) zum Verbinden einer elektrischen Vorrichtung mit mehreren elektrischen Leitern (2), wobei das Verbindungssystem (1) Folgendes umfasst:
- einen Körper (13) zum Installieren in einem oder durch ein Loch in einer Wand oder einer Decke, wobei der Körper einen unteren Teil (3) aufweist, um nahe an einer vorderen Oberfläche der Wand oder der Decke positioniert zu sein, wenn er installiert ist, wobei der Körper einen oberen Teil (4) aufweist, um von der vorderen Oberfläche der Wand oder der Decke weg positioniert zu sein, wenn er installiert ist,
- eine Montageanordnung (5) zum Befestigen des Verbindungssystems (1) an der Wand oder der Decke, wobei die Montageanordnung (5) mit dem unteren Teil (3) des Körpers (13) verbindbar ist, mit diesem verbunden ist und/oder Teil davon ist;
- mehrere Verbinder (6) zum Verbinden der mehreren elektrischen Leiter (2) mit der Vorrichtung, wobei die mehreren Verbinder (6) in oder auf dem oberen Teil (4) des Körpers (13) und nebeneinander in einer Richtung (Z) angeordnet sind, die sich von der Montageanordnung (5) weg erstreckt, wenn sie installiert sind; und
- eine Schutzabdeckung (10) zum Abdecken der mehreren Verbinder (6), wenn sie installiert ist, wobei das Verbindungssystem (1) ferner Folgendes umfasst:
- wenigstens eine Kabelführung (8) zum Führen von wenigstens einem Kabel (9), wobei die wenigstens eine Kabelführung (8) Teil des oberen Teils (4) des Körpers ist oder an diesem befestigt ist, in dem die wenigstens eine Kabelführung (8) und die mehreren Verbinder (6) derart angeordnet sind, dass sie eine Verbindung der mehreren elektrischen Leiter (2) mit den mehreren Verbindern (6) ermöglichen, wobei die mehreren elektrischen Leiter (2) in Form von isolierten und eingekapselten Drähten in dem wenigstens einen Kabel (9) bereitgestellt sind, das durch die wenigstens eine Kabelführung (8) geführt wird.

2. Verbindungssystem nach Anspruch 1, wobei die mehreren Verbinder (6) nebeneinander in einer Richtung (Z) angeordnet sind, die im Wesentlichen senkrecht zu der Montageanordnung (5) ist.

3. Verbindungssystem nach einem der vorhergehenden Ansprüche, wobei die mehreren Verbinder (6) von der wenigstens einen Kabelführung (8) durch einen Winkelabstand von wenigstens 90° um den oberen Teil (4) herum beabstandet sind.

4. Verbindungssystem nach einem der vorhergehenden Ansprüche, wobei die wenigstens eine Kabelführung (8) zum Führen des wenigstens einen Kabels (9) unter einem spitzen Winkel hinsichtlich der Richtung (Z) angepasst ist.

5. Verbindungssystem nach Anspruch 4, wobei die Kabelführung (8) zum Führen des wenigstens einen Kabels (9) unter einem Winkel in dem Bereich von 30 bis 65 Grad hinsichtlich der Richtung (Z) angepasst ist.

6. Verbindungssystem nach Anspruch 5, das ein Scharnier (11) zum mechanischen Verbinden der Schutzabdeckung (10) mit dem oberen Teil (4) des Körpers derart umfasst, dass die Schutzabdeckung (10) um den oberen Teil (4) des Körpers herum geklappt werden kann, wenn sie sich von einer offenen Position, in der die mehreren Verbinder (6) und die mehreren elektrischen Leiter (2) manipuliert werden können, in eine geschlossene Position bewegt, in der die mehreren Verbinder (6) und die mehreren elektrischen Leiter (2) abgedeckt sind, um einen versehentlichen Kontakt zu verhindern.

7. Verbindungssystem nach Anspruch 6, in dem die Schutzabdeckung (10) wenigstens ein weiteres Scharnier (12) umfasst, das die Schutzabdeckung (10) in mehrere Segmente unterteilt.

8. Verbindungssystem nach einem der vorhergehenden Ansprüche, in dem das Verbindungssystem die elektrische Vorrichtung umfasst.

9. Verbindungssystem nach Anspruch 8, in dem die elektrische Vorrichtung einen Sensor, einen Aktuator und/oder eine Steuerung umfasst.

10. Verbindungssystem nach einem der Ansprüche 1 bis 7, das eine Anlagerungsanordnung zum mechanischen Anlagern der elektrischen Vorrichtung an dem Verbindungssystem umfasst.

11. Verbindungssystem nach einem der vorhergehenden Ansprüche, in dem die Montageanordnung (5) einen Bund oder einen Flansch (17) umfasst, der einen Außenumfang aufweist, der derart größer als ein Außenumfang des oberen Teils (4) ist, dass der Bund oder der Flansch (17) an der vorderen Oberfläche der Wand oder der Decke um das Loch herum anliegt, wenn er installiert ist.

12. Verbindungssystem nach einem der vorhergehenden Ansprüche, in dem die mehreren Verbinder (6) derart reversibel entfernbar sind, dass die mehreren Verbinder von dem Körper (13) entfernt werden können, um die mehreren elektrischen Leiter mit den mehreren Verbindern zu verbinden.

13. Verfahren zum Verbinden einer elektrischen Vorrichtung mit mehreren elektrischen Leitern (2) eines Kabels (9) in der Wand und/oder der Decke, wobei das Verfahren Folgendes umfasst:
- Bereitstellen eines Verbindungssystems (1) nach einem der vorhergehenden Ansprüche,
- Bereitstellen einer Wand oder einer Decke, die ein Loch darin aufweist, zum Installieren des Verbindungssystems (1) in der oder durch die Wand oder die Decke, die ein Kabel (9) abdeckt oder einbettet, das mehrere elektrische Leiter (2) umfasst,
- Erhalten eines freien Endes des Kabels (9) durch das Loch aus der Wand oder der Decke,
- Verbinden der mehreren elektrischen Leiter (2) an dem freien Ende mit den mehreren Verbindern (6) des Verbindungssystems (1),
- Einführen des oberen Teils (4) des Körpers des Verbindungssystems (1) in oder durch das Loch, und
- Befestigen des Verbindungssystems (1) an der Wand oder der Decke unter Verwendung der Montageanordnung (5).

14. Verfahren nach Anspruch 13, das das Führen des Kabels (9) durch die Kabelführung (8) umfasst.

15. Verfahren nach Anspruch 13 oder 14, das ein Klappen der Schutzabdeckung (10) um den oberen Teil (4) des Körpers herum umfasst, um die mehreren Verbinder (6) und die mehreren elektrischen Leiter (2) abzudecken.

## Revendications

1. Système de connexion (1) pour connecter un dispositif électrique à une pluralité de conducteurs électriques (2), ledit système de connexion (1) comprenant
- un corps (13) pour installer dans ou à travers un trou dans une paroi ou un plafond, ledit corps comportant une partie inférieure (3) pour être positionnée à proximité d'une surface avant de ladite paroi ou dudit plafond une fois installé, ledit corps comportant une partie supérieure (4) pour être positionné à l'écart de ladite surface avant de ladite paroi ou dudit plafond une fois installé,
- un ensemble de montage (5) pour la fixation dudit système de connexion (1) à ladite paroi ou audit plafond, ledit ensemble de montage (5) pouvant être connecté à, étant connecté à et/ou à une partie de ladite partie inférieure (3) dudit corps (13) ;
- une pluralité de connecteurs (6) pour la connexion de la pluralité de conducteurs électriques (2) au dispositif, ladite pluralité de connecteurs (6) étant agencés dans ou sur ladite partie supérieure (4) dudit corps (13) et les uns à côté des' autres dans une direction (Z), laquelle s'écarte de l'ensemble de montage (5) une fois installés ; et
- un couvercle de protection (10) pour le recouvrement de la pluralité de connecteurs (6) une fois installés, ledit système de connexion (1) comprenant en outre :
- au moins un guide-câble (8) destiné au guidage d'au moins un câble (9), ledit au moins un guide-câble (8) faisant partie de ou étant fixé à ladite partie supérieure (4) du corps, dans lequel l'au moins un guide-câble (8) et la pluralité de connecteurs (6) sont agencés de manière à permettre une connexion entre la pluralité de conducteurs électriques (2) et la pluralité de connecteurs (6),
la pluralité de conducteurs électriques (2) étant fournis sous la forme de fils isolés et encapsulés dans l'au moins un câble (9) guidé par l'au moins un guide-câble (8).

2. Système de connexion selon la revendication 1, dans lequel ladite pluralité de connecteurs (6) sont agencés les uns à côté des autres dans une direction (Z), laquelle est sensiblement perpendiculaire audit ensemble de montage (5).

3. Système de connexion selon l'une quelconque des revendications précédentes, dans lequel la pluralité de connecteurs (6) sont espacés de l'au moins un guide-câble (8) par une séparation angulaire autour de la partie supérieure (4) d'au moins 90 °.

4. Système de connexion selon l'une quelconque des revendications précédentes, dans lequel ledit au moins un guide de câble (8) est conçu pour guider l'au moins un câble (9) sous un angle aigu par rapport à ladite direction (Z).

5. Système de connexion selon la revendication 4, dans lequel ledit guide-câble (8) est conçu pour guider l'au moins un câble (9) sous un angle dans la plage comprise entre 30 et 65 degrés par rapport à ladite direction (Z).

6. Système de connexion selon la revendication 5, comprenant une charnière (11) pour la liaison mécanique du couvercle de protection (10) à la partie supérieure (4) du corps de telle sorte que le couvercle de protection (10) peut être plié autour de la partie supérieure (4) du corps lors du passage d'une position ouverte, dans laquelle la pluralité de connecteurs (6) et la pluralité de conducteurs électriques (2) peuvent être manipulés, à une position fermée, dans laquelle la pluralité de connecteurs (6) et la pluralité de conducteurs électriques (2) sont recouverts pour empêcher un contact accidentel.

7. Système de connexion selon la revendication 6, dans lequel le couvercle de protection (10) comprend au moins une autre charnière (12) divisant le couvercle de protection (10) en une pluralité de segments.

8. Système de connexion selon l'une quelconque des revendications précédentes, dans lequel ledit système de connexion comprend le dispositif électrique.

9. Système de connexion selon la revendication 8, dans lequel le dispositif électrique comprend un capteur, un actionneur et/ou un dispositif de commande.

10. Système de connexion selon l'une quelconque des revendications 1 à 7, comprenant un ensemble de fixation destiné à la fixation mécanique du dispositif électrique audit système de connexion.

11. Système de connexion selon l'une quelconque des revendications précédentes, dans lequel ledit ensemble de montage (5) comprend un collier ou une bride (17) présentant une circonférence extérieure supérieure à une circonférence extérieure de ladite partie supérieure (4) de telle sorte que ledit collier ou ladite bride (17) vient en butée sur la surface avant du mur ou du plafond autour du trou une fois installé.

12. Système de connexion selon l'une quelconque des revendications précédentes, dans lequel ladite pluralité de connecteurs (6) est amovible de manière réversible de telle sorte que ladite pluralité de connecteurs peut être retirée du corps (13) pour connecter la pluralité de conducteurs électriques à la pluralité de connecteurs.

13. Procédé de connexion d'un dispositif électrique à une pluralité de conducteurs électriques (2) d'un câble (9) dans ladite paroi et/ou dans ledit plafond, ledit procédé comprenant :
- la fourniture d'un système de connexion (1) selon l'une quelconque des revendications précédentes,
- la fourniture d'une paroi ou d'un plafond comportant un trou à l'intérieur pour l'installation du système de connexion (1) à l'intérieur ou à travers, ladite paroi ou ledit plafond recouvrant ou intégrant un câble (9) comprenant une pluralité de conducteurs électriques (2),
- l'obtention d'une extrémité libre dudit câble (9) à travers le trou hors de la paroi ou du plafond,
- la connexion de ladite pluralité de conducteurs électriques (2) au niveau de ladite extrémité libre à la pluralité de connecteurs (6) du système de connexion (1),
- l'insertion de la partie supérieure (4) du corps du système de connexion (1) à l'intérieur ou à travers le trou, et
- la fixation du système de connexion (1) à ladite paroi ou audit plafond à l'aide de l'ensemble de montage (5).

14. Procédé selon la revendication 13, comprenant le guidage du câble (9) par le guide-câble (8).

15. Procédé selon la revendication 13 ou 14, comprenant le pliage du couvercle de protection (10) autour de la partie supérieure (4) du corps pour recouvrir la pluralité de connecteurs (6) et la pluralité de conducteurs électriques (2).
